# EUROPÄISCHE PATENTSCHRIFT

(11) **EP 2 929 683 B1**
(45) Veröffentlichungstag und Bekanntmachung des Hinweises auf die Patenterteilung: **07.02.2018**
(21) Anmeldenummer: 13799279.8
(22) Anmeldetag: 29.11.2013
(51) Int. Cl.: H04N 17/00, B60S 1/08, G01M 17/00

(54) **VORRICHTUNG ZUR FAHRZEUGUMFELDÜBERWACHUNG**
DEVICE FOR MONITORING THE SURROUNDINGS OF A VEHICLE
DISPOSITIF DE SURVEILLANCE DE L'ENVIRONNEMENT D'UN VÉHICULE

(30) Priorität: 10.12.2012 DE 102012222668
(43) Veröffentlichungstag der Anmeldung: 14.10.2015
(73) Patentinhaber: Robert Bosch GmbH, 70442 Stuttgart (DE)
(72) Erfinder: SCHOENHERR, Michael, 71272 Renningen-Malmsheim (DE); HOFFMANN, Christian, 71229 Leonberg (DE)
(86) Internationale Anmeldenummer: PCT/EP2013/075121
(87) Internationale Veröffentlichungsnummer: WO 2014/090604

(56) Entgegenhaltungen:
- WO-A1-2009/109231
- CN-U- 201 594 146
- JP-A- 2001 155 286
- KR-A- 20120 130 453
- KR-B1- 100 943 410
- US-A1- 2003 187 557

## Beschreibung

### Stand der Technik

Die Erfindung geht aus von einer Vorrichtung zur Fahrzeugumfeldüberwachung nach dem Oberbegriff des Anspruchs 1.

Das Dokument US 2003/0187557 A1 beschreibt ein Automobildiagnosesystem, das Unterkomponenten des Fahrzeugs in Echtzeit überwacht.

Die Schrift JP 2001 - 155 286 A offenbart eine stationäre Überwachungseinrichtung für eine Straßenoberfläche.

Kraftfahrzeuge sind in zunehmendem Maße mit Vorrichtungen zur Fahrzeugumfeldüberwachung ausgestattet, welche die Übersicht verbessern und somit beim Rangieren oder auch Einparken helfen können. Dafür werden verschiedene Sensorarten wie z. B. Ultraschallsensoren, Videokameras, Lidarsensoren und so weiter verwendet. Bedingt durch Funktionen mit hohem Automatisierungsgrad im Automobilbereich, wie z. B. dem vollständigen automatischen Einparken, werden die Ansprüche an Sensoren hinsichtlich Genauigkeit, Robustheit und Verlässlichkeit immer höher. Die Möglichkeiten der Diagnose oder Selbstdiagnose von Sensoren werden deshalb immer wichtiger. Im Stand der Technik sind Vorrichtungen zur Fahrzeugumfeldüberwachung mit mehreren Sensoren, wie z. B. Ultraschallsensoren kombiniert mit Rückfahrkameras, bekannt. Im Stand der Technik sind weiterhin Sensoren mit zusätzlichen Systemen zur Selbstdiagnose bekannt. Die Druckschrift DE 10 2006 044 786 A1 beschreibt ein Kamerasystem in einem kamerabasierten Assistenzsystem eines Fahrzeugs, bei dem ein Prüfstrahl zur Prüfung einer Verschmutzung eines auf der Kamera angeordneten transparenten Prüfkörpers erzeugt wird, worauf ein verschmutzungsindikativer Teilstrahl des Prüfstrahls detektiert wird. Die Druckschrift DE 10 2004 028 860 A1 beschreibt eine Objekterkennungsvorrichtung für Fahrzeuge, die dafür vorgesehen ist, ein Anhaften von Schmutz an einem Radar zu erfassen. Dazu weist die Vorrichtung eine Schmutzerfassungsschaltung auf, die basierend auf Zeitmessungen bestimmen kann, ob Schmutz auf dem Radar haftet.

### Aufgabe der Erfindung

Die Aufgabe der Erfindung besteht darin, eine Vorrichtung zur Fahrzeugumfeldüberwachung zu schaffen, welche wenigstens einen ersten Sensor und einen zweiten Sensor zur Fahrzeugumfelderfassung aufweist und welcher eine Zustandserkennung oder Diagnose des zweiten Sensors mittels des ersten Sensors ermöglicht.

### Vorteile der Erfindung

Die Erfindung geht aus von einer Vorrichtung zur Fahrzeugumfeldüberwachung, mit einem ersten Sensor zur Fahrzeugumfelderfassung, mit einem zweiten Sensor zur Fahrzeugumfelderfassung und mit einer Auswerteeinheit, wobei der erste Sensor zur Fahrzeugumfelderfassung einen ersten Erfassungsbereich aufweist. Der Kern der Erfindung besteht darin, dass der zweite Sensor zur Fahrzeugumfelderfassung innerhalb des ersten Erfassungsbereichs angeordnet ist, und mittels der Auswerteeinheit eine Diagnose des zweiten Sensors möglich ist. Erfindungsgemäß wird also eine Diagnose des zweiten Sensors mit Hilfe des ersten Sensors durchgeführt. Vorteilhaft ist für die Diagnose des zweiten Sensors kein Selbstdiagnosesystem in oder an dem zweiten Sensor notwendig. Vorteilhaft ist auch, dass der erste Sensor nicht nur zur Fahrzeugüberwachung dient, sondern als zweite Funktion zusätzlich eine Diagnose des zweiten Sensors ermöglicht. Eine vorteilhafte Ausgestaltung der Erfindung sieht vor, dass der erste Sensor eine Kamera ist. Vorteilhaft kann mit der Kamera der äußere Zustand des zweiten Sensors erfasst werden, insbesondere kann festgestellt werden, ob der zweite Sensor verschmutzt oder auch äußerlich beschädigt ist. Besonders vorteilhaft ist dabei, dass der zweite Sensor innerhalb des Öffnungswinkels der Kamera angeordnet ist. Rückfahrkameras zur Fahrzeugumfeldüberwachung weisen oftmals ein Weitwinkelobjektiv auf. Vorteilhaft ist der zweite Sensor innerhalb des Öffnungswinkels dieses Weitwinkelobjektivs der Kamera angeordnet. Hierdurch kann der äußere Zustand, insbesondere der Nutzungsgrad des zweiten Sensors, unmittelbar optisch erkannt und bewertet werden. Eine vorteilhafte Ausgestaltung der Erfindung sieht vor, dass der zweite Sensor ein Ultraschallsensor ist. Ultraschallsensoren sind in aller Regel im Stoßfänger angeordnet, um eine Fahrzeugumfelderfassung durch Abstandserkennung im Nahbereich zu gewährleisten. In dieser Einbaulage verschmutzen Ultraschallsensoren allerdings auch sehr leicht. Die Diagnose des Ultraschallsensors ist daher für die Vorrichtung zur Fahrzeugumfeldüberwachung von besonderer Bedeutung. Eine andere vorteilhafte Ausgestaltung der Erfindung sieht vor, dass der zweite Sensor eine Kamera ist. Vorteilhaft können so bei kamerabasierten Vorrichtungen zur Fahrzeugumfeldüberwachung eine erste Kamera die zweite Kamera diagnostizieren bzw. sich zwei oder mehr Kameras gegenseitig diagnostizieren. Eine vorteilhafte Ausgestaltung der Erfindung sieht vor, dass eine oberflächliche Verschmutzung des zweiten Sensors diagnostizierbar ist. Vorteilhaft ist der erste Sensor zur Fahrzeugumfelderfassung außerhalb des zweiten Sensors zur Fahrzeugumfelderfassung angeordnet, sodass er den äußeren Zustand, insbesondere eine oberflächliche Verschmutzung des zweiten Sensors, feststellen kann. Eine derartige oberflächliche Verschmutzung ist durch einen etwaigen Selbsttest des zweiten Sensors nicht leicht zu diagnostizieren, weil die inneren Funktionen des Sensors davon oftmals unbeeinflusst sind.

Die Erfindung betrifft auch ein Verfahren zur Diagnose eines zweiten Sensors zur Fahrzeugumfelderfassung mittels einer Vorrichtung zur Fahrzeugumfeldüberwachung mit einem ersten Sensor und mit einem zweiten Sensor zur Fahrzeugumfelderfassung und mit einer Auswerteeinheit, wobei der erste Sensor zur Fahrzeugumfelderfassung einen ersten Erfassungsbereich aufweist und wobei der zweite Sensor zur Fahrzeugumfelderfassung innerhalb des ersten Erfassungsbereichs angeordnet ist. Das erfindungsgemäße Verfahren ist durch nachfolgende Schritte gekennzeichnet:
(A) - Erfassen von Daten in einem ersten Erfassungsbereich durch den ersten Sensor
(B) - Bereitstellen der erfassten Daten in der Auswerteeinheit
(C) - Bereitstellen von Referenzdaten in der Auswerteeinheit
(D) - Vergleich der erfassten Daten mit den Referenzdaten
(E) - Diagnose des zweiten Sensors durch Bewerten des im Schritt (D) durchgeführten Vergleichs

Vorteilhaft lässt sich durch das erfindungsgemäße Verfahren der zweite Sensor diagnostizieren. Insbesondere ist es möglich, durch Vergleich mit Referenzdaten eine Veränderung des zweiten Sensors gegenüber einem früheren, in Form der Referenzdaten hinterlegten Zustand festzustellen.

### Zeichnung

Figur 1 zeigt ein Fahrzeug mit einer Anordnung von einem ersten Sensor und einem zweiten Sensor zur Fahrzeugumfelderfassung der erfindungsgemäßen Vorrichtung zur Fahrzeugumfeldüberwachung.
Figur 2 zeigt schematisch eine erfindungsgemäße Vorrichtung zur Fahrzeugumfeldüberwachung.
Figur 3 zeigt schematisch ein erfindungsgemäßes Verfahren zur Diagnose eines zweiten Sensors zur Fahrzeugumfeldüberwachung.

### Ausführungsbeispiel

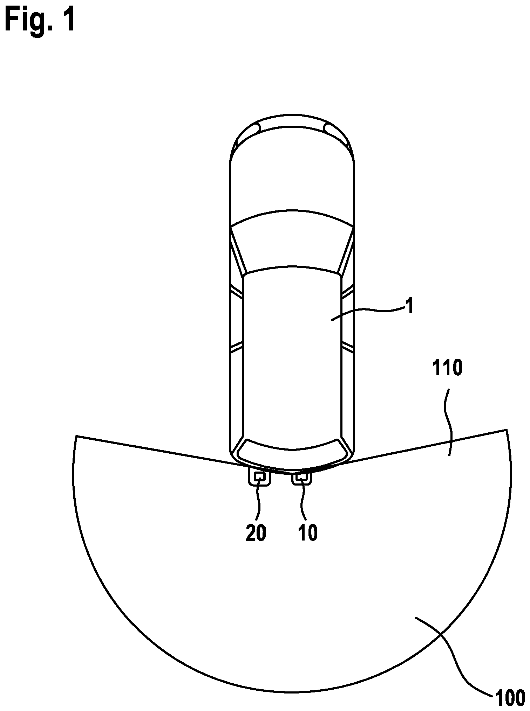

Figur 1 zeigt ein Fahrzeug mit einer Anordnung eines ersten Sensors und eines zweiten Sensors zur Fahrzeugumfelderfassung der erfindungsgemäßen Vorrichtung zur Fahrzeugumfeldüberwachung. Das Ausführungsbeispiel zeigt ein Fahrzeug 1 mit einem ersten Sensor 10 zur Fahrzeugumfeldüberwachung, welcher am hinteren Ende des Fahrzeugs befestigt ist. Der Sensor 10 weist einen Erfassungsbereich 100 auf, welcher durch einen Öffnungswinkel 110 und die Reichweite des Sensors begrenzt wird. Der Sensor 10 kann beispielsweise eine Rückfahrkamera sein. Im Erfassungsbereich des ersten Sensors 10 ist ein zweiter Sensor 20 zur Fahrzeugumfelderfassung angeordnet. Der zweite Sensor 20 kann z. B. ein Ultraschallsensor sein, welcher am hinteren Stoßfänger des Fahrzeugs 1 angeordnet ist. Die Anordnung des zweiten Sensors 20 im Erfassungsbereich 100 des ersten Sensors 10 ermöglicht es, dass der erste Sensor 10 den zweiten Sensor 20 miterfasst. In dem hier beschriebenen Fall, dass der erste Sensor 10 eine Kamera ist, bedeutet das, dass die Kamera den zweiten Sensor 20 optisch erfasst und somit ein Bild des äußeren Zustandes dieses zweiten Sensors 20 wiedergeben kann. Veränderungen des äußeren Zustands des zweiten Sensors 20 gegenüber einem früheren oder ReferenzZustand lassen sich mit Mitteln der Bildverarbeitung feststellen. Festgestellte Veränderungen des Zustandes des zweiten Sensors 20 lassen sich dahingehend bewerten, ob dieser Sensor beispielsweise verschmutzt oder äußerlich beschädigt worden ist. Daraus kann eine Information oder Bewertung über die Zuverlässigkeit des zweiten Sensors 20 abgeleitet werden, welche in seine weitere Verwendung zur Fahrzeugumfelderfassung einfließen kann.

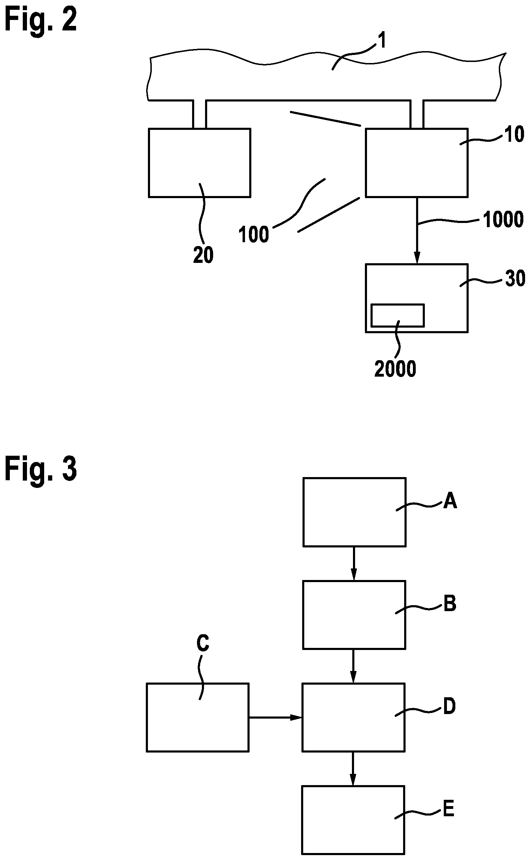

Figur 2 zeigt schematisch eine erfindungsgemäße Vorrichtung zur Fahrzeugumfeldüberwachung. In der Figur 2 ist schematisch das Fahrzeug 1 dargestellt, an dem der erste Sensor 10 und der zweite Sensor 20 mechanisch befestigt sind. Der erste Sensor 10 weist einen Erfassungsbereich 100 auf, welcher auch den zweiten Sensor 20 umfasst. Vom ersten Sensor 10 erfasste Daten 1000 werden einer Auswerteeinheit 30 zugeleitet, in welcher Referenzdaten 2000 hinterlegt sind. Aus dem Vergleich der erfassten Daten 1000 mit den Referenzdaten 2000 kann auf den Zustand des zweiten Sensors 20 geschlossen werden und der zweite Sensor 20 somit diagnostiziert werden.

Figur 3 zeigt schematisch ein erfindungsgemäßes Verfahren zur Diagnose eines zweiten Sensors zur Fahrzeugumfelderfassung. Das Betriebsverfahren wird mit einer erfindungsgemäßen Vorrichtung wie vorstehend beschrieben durchgeführt. Das erfindungsgemäße Verfahren ist gekennzeichnet durch die Schritte:
(A) - Erfassen von Daten 1000 in dem ersten Erfassungsbereich 100 durch den ersten Sensor 10
(B) - Bereitstellen der erfassten Daten 1000 in der Auswerteeinheit 30
(C) - Bereitstellen von Referenzdaten 2000 in der Auswerteeinheit 30
(D) - Vergleich der erfassten Daten 1000 mit den Referenzdaten 2000
(E) - Diagnose des zweiten Sensors 20 durch Bewerten des im Schritt (D) durchgeführten Vergleichs.

Bei dem erfindungsgemäßen Verfahren muss der Schritt (A) vor dem Schritt (B) durchgeführt werden. Der Schritt (C) ist unabhängig von den Schritten (A) und (B). Die Schritte (B) und (C) müssen jedoch vor dem Schritt (D) erfolgen. Der Schritt (E) erfolgt nach dem Schritt (D).

## Patentansprüche

1. Vorrichtung zur Fahrzeugumfeldüberwachung, mit einem ersten Sensor (10) zur Fahrzeugumfelderfassung, mit einem zweiten Sensor (20) zur Fahrzeugumfelderfassung und mit einer Auswerteeinheit (30), wobei der erste Sensor (10) zur Fahrzeugumfelderfassung einen ersten Erfassungsbereich (100) aufweist,
**dadurch gekennzeichnet, dass**
der erste Sensor (10) und der zweite Sensor (20) an einem Fahrzeug angeordnet sind, und
der zweite Sensor (20) zur Fahrzeugumfelderfassung innerhalb des ersten Erfassungsbereichs (100) angeordnet ist, wobei der erste Sensor (10) eine Kamera ist und die Kamera den zweiten Sensor (20) optisch erfasst und Mittel zur Bildverarbeitung vorgesehen sind, Veränderungen des äußeren Zustands des zweiten Sensors (20) gegenüber einem Referenzzustand festzustellen und zu bewerten, ob der zweite Sensor (20) verschmutzt oder äußerlich beschädigt worden ist.

2. Vorrichtung nach Anspruch 1, **dadurch gekennzeichnet, dass** der zweite Sensor (20) innerhalb des Öffnungswinkels (110) der Kamera angeordnet ist.

3. Vorrichtung nach einem der vorhergehenden Ansprüche, **dadurch gekennzeichnet, dass** der zweite Sensor (20) ein Ultraschallsensor ist.

4. Vorrichtung nach einem der vorhergehenden Ansprüche, **dadurch gekennzeichnet, dass** der zweite Sensor (20) eine Kamera ist.

5. Vorrichtung nach einem der vorhergehenden Ansprüche, **dadurch gekennzeichnet, dass** eine oberflächliche Verschmutzung des zweiten Sensors (20) diagnostizierbar ist.

6. Verfahren zur Diagnose eines zweiten Sensors (20) zur Fahrzeugumfelderfassung mittels einer Vorrichtung zur Fahrzeugumfeldüberwachung nach einem der vorhergehenden Ansprüche, **gekennzeichnet durch** die Schritte:
(A) - Erfassen von Daten (1000) in dem ersten Erfassungsbereich durch den ersten Sensor (10)
(B) - Bereitstellen der erfassten Daten (1000) in der Auswerteeinheit (30),
(C) - Bereitstellen von Referenzdaten (2000) in der Auswerteeinheit (30)
(D) - Vergleich der erfassten Daten (1000) mit den Referenzdaten (2000)
(E) - Diagnose des zweiten Sensors (20) durch Bewerten des im Schritt D durchgeführten Vergleichs.

## Claims

1. Device for monitoring the surroundings of a vehicle, having a first sensor (10) for a detection of the surroundings of a vehicle, having a second sensor (20) for the detection of the surroundings of the vehicle and having an evaluating unit (30), the first sensor (10) for the detection of the surroundings of a vehicle having a first detection range (100),
**characterized in that**
the first sensor (10) and the second sensor (20) are arranged on a vehicle, and
the second sensor (20) for the detection of the surroundings of a vehicle is arranged inside the first detection range (100), the first sensor (10) being a camera and the camera detecting the second sensor (20) optically and means for image processing being provided in order to find changes to the external state of the second sensor (20) compared with a reference state and to evaluate whether the second sensor (20) is soiled or has been externally damaged.

2. Device according to Claim 1, **characterized in that** the second sensor (20) is arranged inside the aperture angle (110) of the camera.

3. Device according to one of the preceding claims, **characterized in that** the second sensor (20) is an ultrasonic sensor.

4. Device according to one of the preceding claims, **characterized in that** the second sensor (20) is a camera.

5. Device according to one of the preceding claims, **characterized in that** a superficial soiling of the second sensor (20) can be diagnosed.

6. Method for the diagnosis of a second sensor (20) for the detection of the surroundings of a vehicle by means of a device for monitoring the surroundings of the vehicle according to one of the preceding claims, **characterized by** the steps:
(A) - detecting data (1000) in the first detection range by means of the first sensor (10)
(B) - providing the detected data (1000) in the evaluating unit (30),
(C) - providing reference data (2000) in the evaluating unit (30),
(D) - comparing the detected data (1000) with the reference data (2000)
(E) - diagnosing the second sensor (20) by evaluating the comparison performed in step D.

## Revendications

1. Dispositif de surveillance de l'environnement d'un véhicule, comprenant un premier capteur (10) destiné à balayer l'environnement du véhicule, comprenant un deuxième capteur (20) destiné à balayer l'environnement du véhicule et comprenant une unité d'interprétation (30), le premier capteur (10) destiné à balayer l'environnement du véhicule possédant une première zone de balayage (100),
**caractérisé en ce que**
le premier capteur (10) et le deuxième capteur (20) sont disposés sur un véhicule, et
le deuxième capteur (20) destiné à balayer l'environnement du véhicule est disposé à l'intérieur de la première zone de balayage (100), le premier capteur (10) étant une caméra et la caméra effectuant un balayage optique du deuxième capteur (20) et des moyens de traitement d'image étant présents en vue de constater des modifications de l'état extérieur du deuxième capteur (20) par rapport à un état de référence et évaluer si le deuxième capteur (20) est encrassé ou a été endommagé extérieurement.

2. Dispositif selon la revendication 1, **caractérisé en ce que** le deuxième capteur (20) est disposé à l'intérieur de l'angle d'ouverture (110) de la caméra.

3. Dispositif selon l'une des revendications précédentes, **caractérisé en ce que** le deuxième capteur (20) est un capteur à ultrasons.

4. Dispositif selon l'une des revendications précédentes, **caractérisé en ce que** le deuxième capteur (20) est une caméra.

5. Dispositif selon l'une des revendications précédentes, **caractérisé en ce qu'**un encrassement de la surface du deuxième capteur (20) peut être diagnostiqué.

6. Procédé de diagnostic d'un deuxième capteur (20) destiné à balayer l'environnement d'un véhicule au moyen d'un dispositif de surveillance de l'environnement d'un véhicule selon l'une des revendications précédentes, **caractérisé par** les étapes
(A) acquisition de données (1000) dans la première zone de balayage par le premier capteur (10),
(B) mise à disposition des données acquises (1000) dans l'unité d'interprétation (30),
(C) mise à disposition de données de référence (2000) dans l'unité d'interprétation (30),
(D) comparaison des données acquises (1000) avec les données de référence (2000),
(E) diagnostic du deuxième capteur (20) par évaluation de la comparaison effectuée à l'étape D.
